# EUROPÄISCHE PATENTSCHRIFT

(11) **EP 0 468 138 B1**
(45) Veröffentlichungstag und Bekanntmachung des Hinweises auf die Patenterteilung: **29.12.1993**
(21) Anmeldenummer: 91105139.9
(22) Anmeldetag: 30.03.1991
(51) Int. Cl.: B62K 25/24, B62K 21/00

(54) **Vorderradaufhängung für Motorräder**
Front wheel suspension for motorcycle
Suspension antérieur de motocyclette

(30) Priorität: 27.07.1990 DE 4023821
(43) Veröffentlichungstag der Anmeldung: 29.01.1992
(73) Patentinhaber: Bayerische Motoren Werke Aktiengesellschaft, 80788 München (DE)
(72) Erfinder: Seidl, Josef, W-8312 Dingolfing (DE)

(56) Entgegenhaltungen:
- EP-A- 0 235 040
- EP-A- 0 321 803
- DE-A- 2 746 823
- DE-A- 3 708 579

## Beschreibung

Die Erfindung bezieht sich auf eine Vorderradaufhängung für Motorräder nach dem Oberbegriff des Hauptanspruchs.

Eine Vorderradaufhängung ist aus der EP-A-0 235 040 bekannt. Diese Lösung sieht zwei übereinander angeordnete Längslenker vor, die den Radträger am Fahrzeugaufbau schwenkbar lagern. Am Radträger selbst sind die Längslenker über Universalgelenke angeschlossen. Desweiteren durchsetzt eine Lenkwelle den mit dem Motorradrahmen verbundenen Lenkkopf. An der Oberseite der Lenkwelle sind die Lenkstangen befestigt, während an ihrem unteren Abschnitt über ein Kardangelenk ein Zwischenhebel angeschlossen ist. Dieser Zwischenhebel ist drehbar mit einem weiteren Zwischenhebel verbunden, der wiederum über ein Kardangelenk am Radträger gelenkig gelagert ist. Die beiden Zwischenhebel sind winkelig zueinander angeordnet und führen beim Einfedern des Vorderrades scherenartige Bewegungen zueinander aus.

Die EP-A-0 321 803 zeigt eine weitere Vorderradaufhängung. Hier ist der Radträger mit nur einem Längslenker am Fahrzeugrahmen schwenkbar angelenkt. Zwischen dem oberen Ende des Radträgers und der Lenkwelle ist ein Zwischenglied vorgesehen, das mit dem einen Ende an der Lenkwelle drehbar gelagert ist und mit seinem anderem Ende am Radträger. Die beiden Drehgelenke verlaufen quer zur Fahrzeuglängsrichtung und parallel zu dem Drehgelenk des Längslenkers, mit dem dieser am Fahrzeugaufbau angelenkt ist. Bei dieser Lösung vermittelt das Zwischenglied beim Einfedern des Vorderrades dem Radträger eine Kreisbahn als Erhebungskurve. Eine derartige Kreisbahn ist aber nicht immer erwünscht, da sich möglicherweise die Fahrwerksgeometrie, wie Nachlauf usw. erheblich verändern kann. Außerdem neigt die bekannte Vorderradaufhängung bei gleichzeitigem Lenkeinschlag und Einfedern des Vorderrades zu Verzwängungen, da die Drehachsen des Zwischengliedes und die des Längslenkers in diesem Fall nicht mehr parallel, sondern windschief zueinander stehen.

Es ist Aufgabe der Erfindung die oben erwähnten Probleme zu beseitigen

Die Aufgabe wird erfindungsgemäß gelöst mit dem Kennzeichen des Anspruchs 1. Vorteilhafte Ausgestaltungen der Erfindung ergeben sich aus den Unteransprüchen.

Die Erfindung besteht demnach in der Maßnahme zwei gelenkig miteinander verbundene Zwischenglieder vorzusehen, die zusätzlich miteinander kraftschlüssig gekoppelt sind. Dabei bleibt die Vorderradaufhängung auch bei der Verwendung nur eines einzigen Längsträgers in sich stabil.

In einer bevorzugten Ausführung sieht die Erfindung zwei Halbscheren vor, die die Lenkwelle und den Radträger miteinander verbinden. Diese Lösung erlaubt verschiedenartige Koppelungen der Zwischenglieder. So sieht eine zweckmäßige Ausführung ineinandergreifende Zahnabschnitte vor, die bei Einfederungsbewegungen ähnlich einem Zahnradpaar miteinander kämmen. In einer einfacheren Ausführung wird auf die Verzahnung verzichtet, die Zwischenglieder sind dann lediglich über Reibschluß miteinander gekoppelt. In einer aufwendigen, jedoch für alle Gebrauchsfälle sicheren Ausführung geschieht das Koppeln der Zwischenglieder über einen Gleitstein. Schließlich kann in Fällen, in denen es angezeigt ist, die Koppelung auch durch einen Treibriemen vorgenommen werden.

In einer weiteren bevorzugten Ausführung wird ähnlich dem Stand der Technik lediglich eine Halbschere als Verbindung zwischen Lenkwelle und Radträger verwendet. Hier ist nach der Erfindung das untere Zwischenglied der Halbschere über einen Treibriemen angekoppelt. Diese Lösung zeichnet sich durch geringen Bauaufwand aus.

Nach der Erfindung sind die Gelenke der Zwischenglieder als Drehgelenke ausgelegt, wobei die Drehachsen alle parallel zueinander verlaufen. Bei einem Lenkeinschlag des Vorderrades und bei gleichzeitigem Einfedern könnte sich, bedingt durch die Kinematik, die Vorderradaufhängung verspannen. Es ist daher vorteilhaft, die Anschlußstelle zwischen den Zwischengliedern und der Lenkwelle oder des Radträgers biegeweich auszulegen.

In einer bevorzugten Ausführung der Erfindung ist hierfür ein Verbindungsstück zwischen Lenkwelle und den Zwischengliedern vorgesehen. Dabei ist das Verbindungsstück an der Lenkwelle drehbar gelagert, die Drehachse verläuft senkrecht gegenüber den Drehachsen der Zwischenglieder. Es liegt auf der Hand, ein derartiges Verbindungsstück statt an der Lenkwelle im Anschlußbereich der Zwischenglieder und des Radträgers vorzusehen.

Schließlich sei darauf hingewiesen, daß die Drehachsen der Zwischenglieder nicht notwendigerweise als Querachsen zur Fahrzeuglängsmittenebene ausgerichtet sein müssen. Sie können in jeden beliebigen Winkel hierzu stehen. Es ist lediglich darauf zu achten, daß bei der Verwendung des Verbindungsstückes deren Drehachse an der Lenkwelle bzw. am Radträger senkrecht gegenüber den Drehachsen der Zwischengliedern verläuft.

Weitere Vorteile der Erfindung ergeben sich aus der nachfolgenden Beschreibung zweier Ausführungsbeispiele und der dazugehörigen Zeichnung. Es zeigen
- **Figur 1**: in schematischer Darstellung den vorderen Abschnitt einer erfindungsgemäßen Vorderradaufhängung eines Motorrades mit Vorderrad und angedeutetem Getriebemotorblock, sowie Teile des Rahmens,
- **Figur 2**: eine vergrößerte Darstellung der Vorderradaufhängung nach Figur 1 im Bereich zwischen Lenkwelle und oberem Ende des Radträgers und
- **Figur 3**: eine ähnliche Darstellung wie in Figur 2 eines zweiten Ausführungsbeispiels, bei dem das untere Zwischenglied über einen Treibriemen angekoppelt ist.

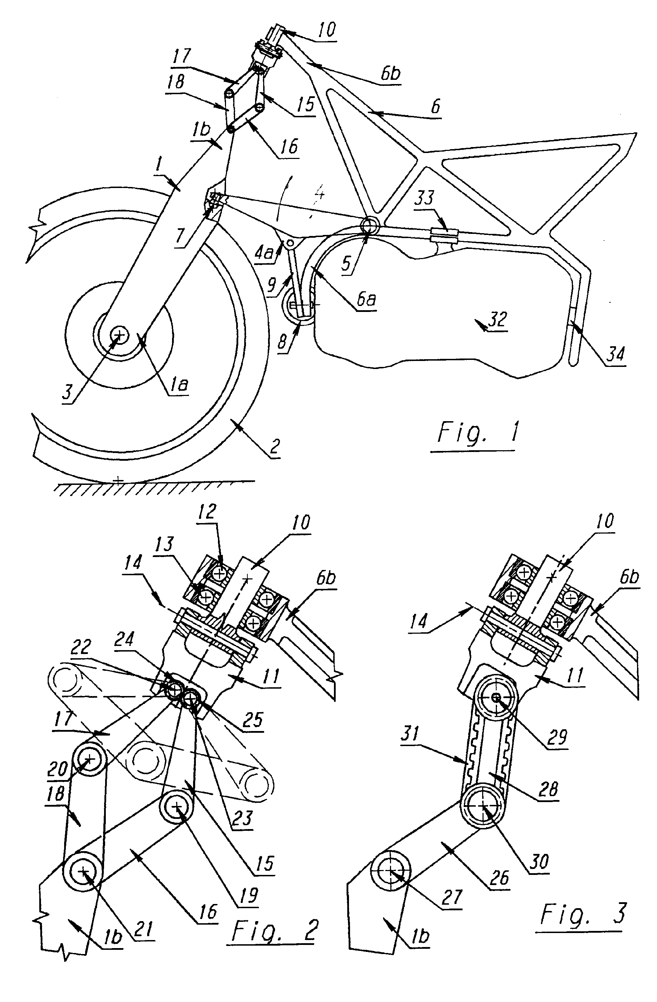

Die in Figur 1 gezeigte Vorderradaufhängung für Motorräder weist einen Radträger 1 auf, der nach oben verläuft und an dessen unterem Ende 1a ein Vorderrad 2 über eine Achswelle 3 drehbar gelagert ist. Der Radträger 1 kann als ein einzelner Arm ausgeführt sein, der seitlich am Vorderrad 2 nach oben geführt ist. Er kann aber ebenso auch als Vorderradgabel ausgelegt sein.

Ein Längslenker 4 ist mit einem Drehgelenk 5 an einem aus mehreren Rohren zusammengebauten Motorradrahmen 6 angelenkt. Die Drehachse des Drehgelenks 5 verläuft quer zur Fahrzeuglängsrichtung. An seinem anderen, vorderen Endabschnitt ist der Längslenker 4 über ein Universalgelenk- oder Kugelgelenk 7 am Radträger 1 oberhalb des Vorderrades 2 angeschlossen.

Ein Federdämpfungssystem 8, das aus einer Druckfeder und einem darin koaxial angeordneten Dämpfer besteht, nimmt die Radlast auf. Es ist hierzu zwischen dem Längslenker 4 und einem Ausleger 6a des Motorradrahmens 6 querliegend angeordnet. Um die Einfederbewegungen auf das Federdämpfungssystem 8 übertragen zu können, sieht der Längslenker 4 an seiner Unterseite ein Anschlußauge 4a für eine Zugstange 9 vor. Die Zugstange 9 führt zu einem am Ausleger 6a gelagerten, in der Zeichnung nicht eindeutig erkennbaren Winkelhebel. An diesem ist die Federdämpfereinheit 8 angeschlossen, gegebenenfalls über eine weitere Zug- oder Druckstange.

Der Vollständigkeit halber sei in Figur 1 noch auf eine Motorgetriebeeinheit 32 hingewiesen, die über elastische Lager 33, 34 am Motorradrahmen 6 aufgehängt ist. Dabei ist die Lage der Lager 33, 34 so gewählt, daß die Normalen ihrer Verschieberichtungen durch den Drehmittelpunkt des schwingenden Triebwerks verlaufen. Dadurch werden die elastischen Lager 33, 34 beim Schwingen des Triebwerks auf Scherung beansprucht. Dies wirkt sich günstig bezüglich der Übertragung dieser Schwingungen auf den Motorradrahmen aus.

Wie Figur 1, aber noch besser Figur 2 zeigt, ist am Motorradrahmen 6 ein Lenkkopf 6b ausgebildet, der über Wälzlager 12 und 13 eine Lenkwelle 10 drehbar lagert. Die Lenkwelle 10 durchsetzt dabei den Lenkkopf 6b. An ihrem unteren, austretenden Ende ist drehbar gelagert ein Verbindungsstück 11 angeschlossen, das wiederum an seiner Unterseite eine topfartige Ausnehmung aufweist. Die Drehachse zwischen dem Verbindungsstück 11 und der Lenkwelle 10 trägt das Bezugszeichen 14.

Zwischen dem Verbindungsstück 11 und dem oberen Endabschnitt 1b des Radträgers 1 sind vier als Zwischenglieder dienende Schenkel 15, 16, 17 und 18 vorgesehen. Je zwei Schenkel bilden eine Halbschere und zwar die Schenkel 15 und 16 und ebenso die Schenkel 17 und 18.

Die Schenkel 15 und 16 sind an ihren zueinander gekehrten Enden drehbar miteinander verbunden. Die Drehachse zeigt in die Zeichnungsebene hinein. Sie ist mit der Bezugsziffer 19 angedeutet. In gleicher Weise sind die Schenkel 17 und 18 miteinander verbunden. Hier trägt die Drehachse die Bezugsziffer 20. Die beiden freien Enden der unteren Schenkel 16 und 18 sind zusammengeführt und in einem einzigen Drehgelenk schwenkbar am Endabschnitt 1b des Radträgers 1 gelagert. Die Drehachse dieses Drehgelenkes ist mit 21 bezeichnet. Die freien Enden der oberen Schenkel 15 und 17 liegen in der topfförmigen Ausnehmung des Verbindungsstückes 11 und sind dort getrennt drehbar gelagert. Die Drehachsen haben die Bezugsziffern 22 und 23. Außerdem sind die oberen freien Enden als Zahnräder 24, 25 ausgeführt, die miteinander kämmen.

Die Drehachsen 19, 20, 21, 22 und 23 sind parallel zueinander ausgerichtet und verlaufen senkrecht zur Drehachse 14. Durch diese Anordnung ermöglichen die Schenkeln 15, 16, 17 und 18 die Übertragung der Drehbewegungen der Lenkwelle 10 auf den Radträger und damit auf das Vorderrad 2. Außerdem erlauben sie ein Einfedern des Vorderrades 2. Der Einfederungszustand ist in Figur 2 durch die gestrichelten Linien dargestellt. Die Schenkel bewegen sich dabei scherenartig zueinander, während sich die Zahnräder 24, 25 der Schenkel 15 und 17 ineinandergreifend abwälzen.

Das Ausführungsbeispiel nach Figur 3 unterscheidet sich gegenüber dem nach Figur 2 darin, daß lediglich eine Halbschere verwendet wird. Es ist ein unterer Schenkel 26 der Halbschere erkennbar, der über ein Drehgelenk - Drehachse 27 - mit dem oberen Abschnitt 1b des Radträgers verbunden ist. Ein oberer Schenkel 28 ist wiederum in einer Ausnehmung des Verbindungsstückes 11 drehbar gelagert, die Drehachse trägt das Bezugszeichen 29. Die einander zugekehrten Enden der beiden Schenkel 28 und 26 drehbar - Drehachse 30 - miteinander verbunden. Ein Treibriemen 31 koppelt die in Drehachse 29 drehfest mit Verbindungsstück 11 verbundenen Riemenscheibe 26. Das Ende des Schenkels, das drehbar am Schenkel 28 gelagert ist, wird - wie bereits erwähnt - auch als Riemenscheibe 26 ausgebildet.

Diese Anordnung erlaubt wiederum das Übertragen der Lenkbewegungen von der Lenkwelle 10 auf den Radträger 1b, sowie das Einfedern des Vorderrades 2.

## Patentansprüche

1. Vorderradaufhängung für Motorräder, bestehend aus
- einem nach oben verlaufenden Radträger (1), an dessen unterem Ende das Vorderrad (2) über die Achswelle (3) drehbar gelagert ist,
- einem Längslenker (4), der mit seinem vorderen Abschnitt über ein Universalgelenk (7) am Radträger (1) gelenkig angebunden und mit seinem hinteren Abschnitt an einem Drehgelenk (5) am Motorradrahmen (6) um eine Querachse schwenkbar gelagert ist,
- einem Federdämpfungssystem (8) zwischen dem Motorradrahmen (6) und dem Längslenker (4),
- einer im Lenkkopf des Motorradrahmens drehbar gelagerten Lenkwelle (10), sowie
- eine gelenkige Verbindung zwischen der Lenkwelle (10) und dem Radträger (1), die die Drehbewegungen der Lenkwelle (10) auf dem Radträger (1) überträgt und beim Einfedern des Vorderrades (2) zusammen mit dem Längslenker (4) dem Radträger (1) eine vorbestimmte Erhebungskurve vermittelt,
**dadurch gekennzeichnet, daß**
die gelenkige Verbindung gebildet ist aus wenigstens zwei drehgelenkig miteinander verbundenen Zwischengliedern (15,17;26,28), die derart kraftschlüssig miteinander gekoppelt sind, daß das Verschwenken eines Zwischengliedes ein definiertes Verschwenken des oder der anderen Zwischenglieder zur Folge hat.

2. Vorderradaufhängung nach Anspruch 1, dadurch gekennzeichnet, daß
- als Zwischenglieder zwei Halbscheren vorgesehen sind,
- jede Halbschere aus einem oberen und einem unteren Schenkel (15, 16; 17, 18) besteht, wobei die beiden Schenkel (15, 16; 17, 18) an einander zugekehrten Enden drehbar miteinander verbunden sind,
- die freien Enden der unteren Schenkel (16, 18) über wenigstens ein Drehgelenk (Drehachse 21) am Radträger (1) schwenkbar gelagert sind,
- die freien Enden der oberen Schenkel (15, 17) kraftschlüssig miteinander verbunden und drehbar an der Lenkwelle (10) angeordnet sind,
- alle Drehachsen (19, 20, 21, 22, 23) der beiden Halbscheren parallel zueinander ausgerichtet sind.

3. Vorderradaufhängung nach Anspruch 2, dadurch gekennzeichnet, daß die freien Enden der oberen Schenkel (15, 17) als ineinander greifende Zahnräder (24, 25) ausgeformt sind.

4. Vorderradaufhängung nach Anspruch 2, dadurch gekennzeichnet, daß sich die freien Enden der oberen Schenkel unter Reibschluß aneinander abwälzen.

5. Vorderradaufhängung nach Anspruch 2, dadurch gekennzeichnet, daß die freien Enden der oberen Schenkel über einen Treibriemen miteinander verbunden sind.

6. Vorderradaufhängung nach Anspruch 2, dadurch gekennzeichnet, daß die freien Enden der oberen Schenkel über einen Gleitstein miteinander gekoppelt sind.

7. Vorderradaufhängung nach Anspruch 1, dadurch gekennzeichnet, daß
- die Zwischenglieder aus einer Halbschere mit einem oberen und einem unterem Schenkel (28, 26) gebildet sind, bei der die beiden Schenkel (26, 28) an ihren einander zugekehrten Enden drehbar miteinander verbunden sind,
- das freie Ende des unteren Schenkels (26) über ein Drehgelenk (Drehachse 27) schwenkbar am Radträger (1) und das freie Ende des oberen Schenkels (28) schwenkbar (Drehachse 29) an der Lenkwelle (10) gelagert ist, wobei alle Drehachsen (27, 29, 30) der Halbschere parallel zueinander ausgerichtet sind,
- am freien Ende des oberen Schenkels (28) eine drehfest mit Verbindungsstück (11) verbundene Riemenscheibe (29) über einen Treibriemen (31) mit dem unteren Schenkel gekoppelt ist.

8. Vorderradaufhängung nach Anspruch 7, dadurch gekennzeichnet, daß der Treibriemen (31) das Ende des unteren Schenkels (26) umschlingt, das mit dem oberen Schenkel (28) drehbar verbunden ist.

9. Vorderradaufhängung nach einem der Ansprüche 1 bis 8, dadurch gekennzeichnet, daß zwischen dem (den) freien Ende(n) des (der) oberen Schenkel(s) und der Lenkwelle (10) ein Verbindungsglied (11) angeordnet ist, in dem der (die) Schenkel der Halbschere(n) drehbar gelagert ist (sind) und das an der Lenkwelle (10) um eine gegenüber den Drehachsen der Halbschere(n) senkrecht verlaufende Drehachse (14) schwenkbar gehalten ist.

## Claims

1. A front wheel suspension for motorcycles, comprising
an upwardly-extending wheel support (1) having a bottom end on which the front wheel (2) is rotatably mounted via the axle shaft (3),
a pull rod (4), the front portion of which is pivotably connected by a universal joint (7) to the wheel carrier (1), and the rear portion of which is mounted on a swivel joint (5) on the motorcycle frame (6) so as to be pivotable around a transverse axis,
a spring damping system (8) between the motorcycle frame (6) and the pull rod (4),
a steering shaft (10) rotatably mounted in the steering head of the motorcycle frame, and
a pivotable connection between the steering shaft (10) and the wheel carrier (1) for transmitting the rotation of the steering shaft (10) to the wheel carrier (1) and co-operating with the pull rod (4), during spring deflection of the front wheel (2), to transmit a predetermined gradient curve to the wheel carrier (1), characterised in that
the pivotable connection is formed from at least two pivotably-interconnected intermediate members (15, 17; 26, 28) which are non-positively coupled so that pivoting of one intermediate member results in defined pivoting of the other intermediate member or members.

2. A front wheel suspension according to claim 1, characterised in that
the intermediate members are in the form of two half-scissor linkages,
each half-scissor linkage comprises an upper and a lower limb or link (15, 16; 17, 18), the two limbs or links (15, 16; 17, 18) being rotatably interconnected at facing ends,
the free ends of the lower limbs or links (16, 18) are pivotably mounted on the wheel carrier (1) via at least one swivel joint (pivot 21),
the free ends of the upper limbs or links (15, 17) are non-positively interconnected and rotatably mounted on the steering shaft (10), and
all the pivots or axes of rotation (19, 20, 21, 22, 23) of the two half-scissor linkages are aligned parallel to one another.

3. A front wheel suspension according to claim 2, characterised in that the free ends of the upper limbs or links (15, 17) are in the form of interlocking gearwheels (24, 25).

4. A front wheel suspension according to claim 2, characterised in that the free ends of the upper limbs or links roll on one another with frictional contact.

5. A front wheel suspension according to claim 2, characterised in that the free ends of the upper limbs or links are connected by a transmission belt.

6. A front wheel suspension according to claim 2, characterised in that the free ends of the upper limbs or linksare connected by a slide ring.

7. A front wheel suspension according to claim 1, characterised in that
the intermediate members are made up of a half-scissor linkage having an upper and a lower limb or link (28, 26), the two limbs or links (26, 28) being rotatably connected at their facing ends,
the free end of the lower limb or link (26) is pivotably mounted on the wheel carrier (1) via a swivel joint (pivot 27) and the free end of the upper limb or link (28) is pivotably mounted (pivot 29) on the steering shaft (10), all the pivots or axes of rotation (27, 29, 30) of the scissor links or limbs being aligned parallel to one another, and
at the free end of the upper limb (28) a pulley (29) non-rotatably connected to a connecting member (11) is coupled to the lower limb or link by a transmission belt (31).

8. A front wheel suspension according to claim 7, characterised in that the transmission belt (31) surrounds that end of the lower limb or link (26) which is rotatably connected to the upper limb or link (28).

9. A front wheel suspension according to any of claims 1 to 8, characterised in that a connecting member (11) is disposed between the free end or ends of the upper limb or limbs and the steering shaft (10), and the limb or limbs of the half-scissor linkage or linkages are rotatably mounted in the connecting member which is held on the steering shaft (10) so as to be pivotable around an axis of rotation (14) extending at right angles to the axes of rotation of the half-scissor linkage or linkages.

## Revendications

1. Suspension avant de motocyclette, comprenant :
- un porte-roue (1), dirigé vers le haut et dont l'extrémité inférieure porte la roue avant (2), par l'intermédiaire de son arbre de rotation (3),
- un bras de suspension longitudinal (4), relié par sa partie avant au porte-roue (1) par une articulation universelle (7) et par sa partie arrière au cadre (6) de la motocyclette par une articulation de rotation (3) à axe transversal,
- un système d'amortissement élastique (8), entre le cadre (6) et le bras oscillant (4),
- un arbre de direction (10), tournant dans un bloc de direction faisant partie de châssis,
- une liaison articulée entre le bras oscillant (10), et le porte-roue (1), transmettant les mouvements de rotation de l'arbre de direction (10) au porte-roue et faisant décrite, en coopération avec le bras oscillant (4) une certaine courbe au porte-roue (1), lorsque la roue avant (2) se déplace par compression élastique ;
caractérisée en ce que la liaison articulée est assurée par au moins deux éléments intermédiaires (15, 17 ; 26, 28) reliés par des articulations de rotation de manière à établir entre eux une liaison cinématique assurant que le basculement d'un élément intermédiaire entraîne un basculement correspondant et défini du ou des autres éléments intermédiaires.

2. Suspension selon la revendication 1, caractérisée 1, en ce que :
- les éléments intermédiaires sont deux demi-paires de ciseaux,
- chaque demi-paire de ciseaux comprend un bras supérieur et un bras inférieur (15, 16 ; 17, 18); articulés entre eux par une de leur extrémité;
- les extrémités libres des bras inférieurs (16, 18) peuvent basculer autour d'au moins une articulation de rotation d'axe (21), fixée au porte-roue ;
- les extrémités libres du bras supérieur (15, 17) sont montées à rotation sur l'arbre de direction (10), avec liaison cinématique entre elles ;
- tous les axes de rotation (19, 20, 21, 2, 23) des demi-paires de ciseaux sont parallèles entre eux.

3. Suspension selon la revendication 2, caractérisée en ce que les extrémités libres des bras supérieurs (15, 17) sont constituées par des pignons (24, 25) en engrènement.

4. Suspension selon la revendication 2, caractérisée en ce que les extrémités libres du bras supérieur roulent l'une sur l'autre, avec entraînement par interpénétration par frottement.

5. Suspension selon la revendication 2, caractérisée en ce que les extrémités libres des bras supérieurs sont reliés entre eux par une courroie de transmission.

6. Suspension selon la revendication 2, caractérisée en ce que les extrémités libres des bras supérieurs sont couplés entre eux, par l'intermédiaire d'un coulisseau.

7. Suspension selon la revendication 1, caractérisée en ce que :
- les éléments intermédiaires non constitués par une demi-paire de ciseaux (28, 26) dont les bras sont reliés en rotation au niveau de leurs extrémités opposées ;
- l'extrémité libre de la branche inférieure (26) peut basculer autour d'une articulation de rotation d'axe (27), fixée au porte-roue (1) tandis que l'extrémité libre de la branche supérieure (28) pour basculer autour d'un axe de rotation (29) porté par l'arbre de direction (10), où tous les axes de rotation (27, 29, 30) de la demi-paire de ciseaux sont dirigés parallèlement entre eux ;
- au niveau de l'extrémité libre de la branche supérieure (28), se trouve une poulie de courroie (29) solidaire en rotation de la pièce de liaison (11) et couplée à la branche inférieure par l'intermédiaire d'une courroie de transmission (31).

8. Suspension selon la revendication 7, caractérisée en ce que la courroie de transmission (31) enveloppe l'extrémité de la branche inférieure (26) qui se trouve entraînée ainsi en rotation par la branche supérieure (28).

9. Suspension selon l'une des revendications 1 à 8, caractérisée en ce qu'elle comporte, entre le (ou les) extrémité(s) de la (ou les) branche(s) et l'arbre de direction (10) une pièce de liaison (11) sur laquelle est (ou sont) montée(s) la (ou les) branches du (ou des) demi-paire(s) de ciseaux (10) et qui elle-même montée basculante sur un axe de rotation (14) perpendiculaire aux axes de rotation de la (ou des) demi-paires de ciseaux.
